# EUROPEAN PATENT APPLICATION

(11) **EP 4 596 753 A1**
(43) Date of publication of application: **06.08.2025**
(21) Application number: 23872040.3
(22) Date of filing: 19.09.2023
(51) Int. Cl.: C23F 11/00, B23D 15/00, C23C 2/06, C23C 2/26, C23C 28/00, E01F 15/04

(54) **CUT ARTICLE, AND GUARDRAIL**

(30) Priority: 29.09.2022 JP 2022157063
(71) Applicant: NIPPON STEEL CORPORATION, Chiyoda-ku Tokyo 100-8071 (JP)
(72) Inventor: HAYASHIDA, Takahide, Tokyo 100-8071 (JP)
(74) Representative: Vossius & Partner Patentanwälte Rechtsanwälte mbB
(86) International application number: PCT/JP2023/033916
(87) International publication number: WO 2024/070812

(57) **Abstract**

A cut-and-processed product of a Zn-Al-Mg-based plated steel material including a base steel material and a Zn-Al-Mg-based plating layer covering a surface of the base steel material, in which a cut end surface of the cut-and-processed product is covered with a linear film in which a component of the Zn-Al-Mg-based plating layer linearly flows, and a coverage of the cut end surface with the linear film is from 60 to 90%, a non-plated surface of the base steel material and the linear film around the non-plated surface, in the cut end surface of the cut-and-processed product, are covered with a repair coat, an initial coat resistivity is from 10 to 1000 Ω/cm² and a coat resistivity after immersion of the cut-and-processed product in 5% by mass salt water for 3 hours is from 5 to 50 Ω/cm², in the repair coat, and a thickness of the repair coat is from 10 to 100 µm, as well as a guardrail utilizing the cut-and-processed product.

## Description

### Technical Field

The present disclosure relates to a cut-and-processed product and a guardrail.

### Background Art

In a case in which plated steel materials are processed into shapes of products, such plated steel materials are cut, and steel basis materials of such steel materials are exposed on some of the cut cross sections. Cut end surfaces not covered with plating layers are lowered in corrosion resistance, and thus such cut end surfaces are required to be increased in corrosion resistance.

Various processing methods and techniques are studied for an enhancement in corrosion resistance of cut end surfaces of plated steel materials. For example, rust-proof processing techniques of cut end surfaces, such as a method of processing an inclined end surface (for example, Patent Literature 1), a slit processing method (for example, Patent Literature 2), and a laser cutting method (for example, Patent Literature 3) are known, in which large portions as compared with end cross surfaces by conventional shirring are covered with plating layers.

It is difficult to cover the entire surfaces of cut cross sections with plating layers, and there is a problem that red rust occurs on some of the exposed cut end surfaces, for example, during the early stage of exposure.

A common conventional corrosion-proof technique of a cut end surface is to apply paint for repair, containing a Zn-based metal powder (for example, Patent Literature 4), to a steel-exposed surface of a cut end surface.

[Patent Literature 1] Japanese Patent Application Laid-Open (JP-A) 2020-32437
[Patent Literature 2] JP-A No. 2017-192989
[Patent Literature 3] JP-A No. 2021-087988
[Patent Literature 4] JP-A No. 2017-122186

### SUMMARY OF INVENTION

### Technical Problem

A combination of a rust-proof processing technique of a cut end surface and paint application, as described above, has been expected to be capable of providing higher corrosion resistance to a cut end surface.

However, the area of a steel basis material of a steel material serving as a cathode is remarkably smaller than that of a plating layer serving as an anode, on a cut end surface, whereby the reduction reaction of water or oxygen collectively occurs, and causes cathode peeling of a repair coat, and thus sufficient corrosion resistance cannot be retained particularly for suppression for red rust resistance during the early stage of corrosion.

Furthermore, cathode peeling of a repair coat occurs, whereby long-term corrosion resistance cannot also be achieved at an expected level.

An object of the disclosure is to provide a cut-and-processed product that is suppressed in cathode peeling of a repair coat and that has excellent corrosion resistance of a cut end surface from the early stage to the long term, and a guardrail utilizing the cut-and-processed product.

### Solution to Problem

Solutions for solving the above problems include the following aspects.
<1> A cut-and-processed product of a Zn-Al-Mg-based plated steel material including a base steel material and a Zn-Al-Mg-based plating layer covering a surface of the base steel material, wherein
   a cut end surface of the cut-and-processed product is covered with a linear film in which a component of the Zn-Al-Mg-based plating layer linearly flows, and a coverage of the cut end surface with the linear film is from 60 to 90%,
   a non-plated surface of the base steel material and the linear film around the non-plated surface, in the cut end surface of the cut-and-processed product, are covered with a repair coat,
   an initial coat resistivity R1 is from 10 to 1000 Ω/cm², and a coat resistivity R2 after immersion of the cut-and-processed product in 5% by mass salt water for 3 hours is from 5 to 50 Ω/cm², in the repair coat, and
   a thickness of the repair coat is 10 µm or more.
<2> The cut-and-processed product according to <1>, wherein the repair coat includes a Zn-based metal powder and a binder resin.
<3> The cut-and-processed product according to <1> or <2>, wherein a maximum length of the linear film on the cut end surface of the cut-and-processed product is from 70 to 100% with respect to a steel thickness of the cut-and-processed product.
<4> The cut-and-processed product according to any one of <1> to <3>, wherein the initial coat resistivity R1 in the repair coat is from 300 to 500 Ω/cm².
<5> The cut-and-processed product according to any one of <1> to <4>, wherein the coat resistivity R2 after immersion in the repair coat is from 10 to 45 Ω/cm².
<6> The cut-and-processed product according to <2>, wherein the Zn-based metal powder includes Zn and Al.
<7> The cut-and-processed product according to <6>, wherein a content of Al with respect to Zn in the Zn-based metal powder including Zn and Al is from 20 to 45% by mass.
<8> The cut-and-processed product according to any one of <6>, wherein a content of Al with respect to Zn in the Zn-based metal powder including Zn and Al is from 28 to 34% by mass.
<9> The cut-and-processed product according to <2>, or any one of <6> to <8>, wherein a content of the Zn-based metal powder with respect to the entire repair coat is from 60 to 80% by mass of the metal powder.
<10> The cut-and-processed product according to any one of <2>, or <6> to <9>, wherein the binder resin is at least one selected from the group consisting of a polystyrene resin and an epoxy resin.
<11> A guardrail including the cut-and-processed product according to any one of <1> to <10>.

### Advantageous Effects of Invention

According to the disclosure, it is possible to provide a cut-and-processed product that is suppressed in cathode peeling of a repair coat and that has excellent corrosion resistance of a cut end surface from the early stage to the long term, and a guardrail utilizing the cut-and-processed product.

### BRIEF DESCRIPTION OF DRAWINGS

[Figure 1] A schematic cross-sectional perspective view illustrating a cut-and-processed product of the disclosure.
[Figure 2] A schematic cross-sectional view of the cut-and-processed product of the disclosure, cut along a direction perpendicular to the cut end surface of the cut-and-processed product and perpendicular to a steel thickness direction.
[Figure 3] A schematic perspective view illustrating a state of a cut end surface in cutting according to a conventional shirring processing method.
[Figure 4] A schematic diagram for describing a specimen for coat resistivity measurement.

### DESCRIPTION OF EMBODIMENTS

Hereinafter, one example of a paint-coated steel plated of the disclosure is described.

A numerical value range herein represented with "(from) ... to ..." in the description means a range including respective numerical values described before and after "to" as a lower limit and an upper limit, respectively.

The upper limit value or the lower limit value described with respect to a certain numerical value range as a numerical value range described stepwise may be replaced with the upper limit value or the lower limit value of other numerical value range described stepwise.

The upper limit value or the lower limit value described with respect to a certain numerical value range as a numerical value range may be replaced with respective values indicated in Examples.

The term "step" encompasses not only an independent step, but also a step that can achieve a predetermined object even in the case of being not clearly distinguished from other steps.

A "combination of preferred aspects" is a more preferred aspect.

In the description, the "Zn-Al-Mg-based plating layer" is also referred to as "plating layer".

The "Zn-Al-Mg-based plated steel material" is also referred to as "plated steel material".

The "non-plated surface" indicates a surface of a base steel material of a plated steel material, in which the surface is not covered with a Zn-Al-Mg-based plating layer.

The cut-and-processed product of the disclosure is a cut-and-processed product of a Zn-Al-Mg-based plated steel material including a base steel material and a Zn-Al-Mg-based plating layer covering a surface of the base steel material.

The cut end surface of the cut-and-processed product is covered with a linear film in which a component of the Zn-Al-Mg-based plating layer linearly flows, and a coverage of the cut end surface with the linear film is from 60 to 90%.

A non-plated surface of the base steel material and the linear film around the non-plated surface, in the cut end surface of the cut-and-processed product, are covered with a repair coat.

The initial coat resistivity is from 10 to 1000 Ω/cm², and the coat resistivity after immersion of the cut-and-processed product in 5% by mass salt water for 3 hours (hereinafter, also referred to as "coat resistivity after immersion in salt water".) is from 5 to 50 Ω/cm², in the repair coat.

The thickness of the repair coat is 10 µm or more.

In the cut-and-processed product of the disclosure, not only the cut end surface of the cut-and-processed product is covered with a linear film in which a component of the Zn-Al-Mg-based plating layer linearly flows, but also a non-plated surface of the base steel material is covered with a repair coat.

The repair coat has the characteristics described above, and therefore cathode peeling is suppressed, and a reduction in corrosion resistance at the early stage of corrosion is suppressed.

Additionally, high corrosion resistance is kept from the early stage of corrosion to the long-term corrosion by the sacrificial corrosion-proof effect with a component of the Zn-Al-Mg-based plating layer and a component of the repair coat.

Therefore, the cut-and-processed product of the disclosure is suppressed in cathode peeling of the repair coat and has excellent corrosion resistance of the cut end surface from the early stage to the long term.

The detail of the cut-and-processed product of the disclosure is described.

### (Plate Steel Material)

The plated steel material is an objective steel material capable of being cut and processed.

The plated steel material is a Zn-Al-Mg-based plated steel material having a base steel material and a plating layer covering a surface of the base steel material. Specifically, the plated steel material favorably has a plating layer on each of both surfaces of the base steel material.

The base steel material is an objective steel material on which a plating layer is to be formed.

The base steel material is not particularly limited. Examples of the base steel material include an extremely low C type (structure essentially consisting of ferrite), Al-k type (structure including perlite in ferrite), two-phase structure type (for example, structure including martensite in ferrite, structure including bainite in ferrite), strain induced transformation type (structure including residual austenite in ferrite), or fine crystal type (structure essentially consisting of ferrite) steel plated.

The plating layer is a plating layer that is a Zn-Al-Mg-based plating layer and that includes at least zinc, aluminum, and magnesium. The Zn-Al-Mg-based plating layer contains Al and Mg and thus has high corrosion resistance as compared with a Zn plating layer or an Al plating layer.

Examples of the plating layer include, in addition to a zinc-aluminum-magnesium plating layer, a well-known Zn-Al-Mg-based plating layer such as a zinc-aluminum-magnesium-tin plating layer, a zinc-aluminum-magnesium-silicon plating layer, or a zinc-aluminum-magnesium-tin-silicon plating layer.

Examples of the plating layer also include a plating layer containing, as a dissimilar metal element or an impurity, cobalt, molybdenum, tungsten, nickel, titanium, chromium, iron, magnesium, lead, bismuth, antimony, tin, copper, cadmium, or arsenicum.

In particular, a zinc-based plating layer is preferably a plating layer containing aluminum or a plating layer containing aluminum and magnesium, in addition to zinc, from the viewpoint of corrosion resistance. In other words, a zinc alloy-plated steel sheet is preferably used as an original sheet because the zinc alloy-plated steel sheet achieves more excellent corrosion resistance than a zinc-plated steel sheet.

Specific examples of the plating layer can include a plating layer including Zn: 65.0%, Al: from 5.0% to 25.0%, and Mg: from 2.0% to 12.5% on the mass ratio.

More specific examples of the plating layer include a plating layer having a chemical composition including, in terms of percentage by mass,
Zn: 65.0%,
Al: from 5.0% to 25.0%,
Mg: from 2.0% to 12.5%,
Sn: from 0% to 20.0%,
Bi: from 0% to 5.0%,
In: from 0% to 2.0%,
Ca: from 0% to 3.00%,
Y: from 0% to 0.5%,
La: from 0% to 0.5%,
Ce: from 0% to 0.5%,
Si: from 0% to 2.5%,
Cr: from 0% to 0.25%,
Ti: from 0% to 0.25%,
Zr: from 0% to 0.25%,
Mo: from 0% to 0.25%,
W: from 0% to 0.25%,
Ag: from 0% to 0.25%,
P: from 0% to 0.25%,
Ni: from 0% to 0.25%,
Co: from 0% to 0.25%,
V: from 0% to 0.25%,
Nb: from 0% to 0.25%,
Cu: from 0% to 0.25%,
Mn: from 0% to 0.25%,
Li: from 0% to 0.25%,
Na: from 0% to 0.25%,
K: from 0% to 0.25%,
Fe: from 0% to 5.0%,
Sr: from 0% to 0.5%,
Sb: from 0% to 0.5%,
Pb: from 0% to 0.5%,
B: from 0% to 0.5%, and
impurities.

The method of forming the plating layer is not particularly limited and may be any known method such as an electroplating method, a hot-dip plating method, a deposition plating method, a dispersion plating method, or a vacuum plating method.

The amount of attachment of the plating layer is not particularly limited, and is preferably from 15 g·m⁻² to 140 g·m⁻². The amount is more preferably from 30 g·m⁻² to 90 g·m⁻².

In a case in which the amount of attachment of the plating layer is 15 g·m⁻² or more, a non-plated portion is inhibited from occurring due to a too small amount of attachment. In a case in which the amount of attachment of the plating layer is 140 g·m⁻² or less, a phenomenon is suppressed in which corrosion resistance is high and a plating layer is colored to black.

### (Cut End Surface of Cut-and-Processed Product)

### -Linear Film-

The cut end surface of the cut-and-processed product according to the disclosure is covered with a linear film in which a component of the Zn-Al-Mg-based plating layer linearly flows. The line width of the linear film is, for example, from about 10 to 100 µm.

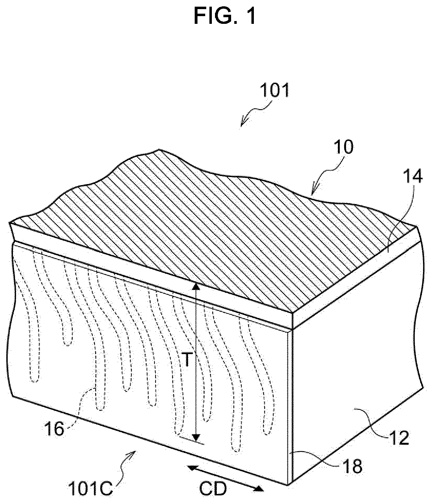

For example, in a case in which the plated steel material is cut and processed by a laser cutting method, a plating layer located around a cut portion formed on a surface of the base steel material is molten by heat with laser. A component of the molten plating layer intermittently flows into the cut end surface, and is again coagulated. Thus, the cut end surface is covered with a linear film including a component of the plating layer (see Figure 1).

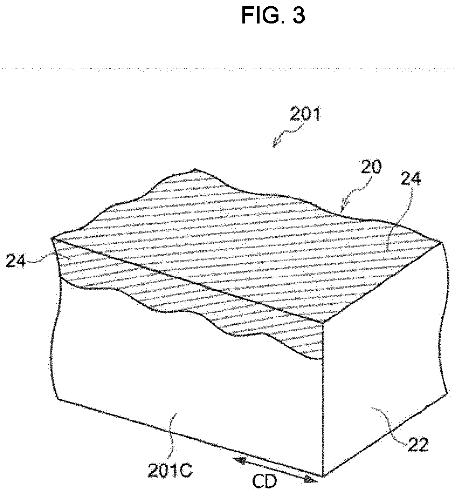

In this regard, in a case in which the plated steel material is cut and processed by a conventional shirring processing method, a plating layer located around a cut portion formed on a surface of the base steel material follows to a shirring blade, and penetrates into the cut end surface. Thus, the cut end surface is covered with a belt-like plating layer (see Figure 3).

In Figure 1, 101 represents the cut-and-processed product, 101C represents the cut end surface, 10 represents the plated steel material, 12 represents the base steel material, 14 represents the plating layer, 16 represents the linear film, and 18 represents the repair coat.

In Figure 3, 201 represents the cut-and-processed product, 201C represents the cut end surface, 20 represents the plated steel material, 22 represents the base steel material, 24 represents the plating layer, and CD represents a cutting direction.

### -Coverage of Linear Film-

The coverage of the cut end surface with the linear film is from 60 to 90%.

In a case in which the coverage with the linear film is less than 60%, the coverage of the cut end surface with the linear film is so low that corrosion resistance is decreased. In this regard, in a case in which the plated steel material is cut, a plating layer on a surface of the plated steel material is molten on one portion of the cut end surface, and a component of the molten plating layer flows into the cut end surface. However, it is difficult for a component of the molten plating layer to flow into the entire surface of the cut end surface.

Accordingly, the coverage with the linear film is set to be in the above range. The coverage with the plating layer is preferably from 70 to 90%.

The coverage with the linear film is measured as follows.

A repair coat (namely, a binder resin) is completely removed from a cut end surface of a cut-and-processed component as a measuring object, by immersion in a solvent that dissolves the repair coat and washing with an ultrasonic washing machine for 1 minute or more.

Next, gold is vapor-deposited at a thickness of about 10 nm on the cut end surface, whereby a specimen is produced.

An element distribution of Zn, Al and Mg among components to be analyzed in a base steel material, a plating layer, carbon and oxygen in the cut end surface of the specimen is measured with an electron probe micro analyzer (EPMA) in a perpendicular direction to the steel thickness. The proportion of a region in which any of Zn, Al and Mg is detected, with respect to the cut cross section, is determined as the coverage with the linear film.

Here, distinguishment between any component of the plating layer and any component of the base steel material in measurement of a component element distribution of the plating layer with EPMA is determined by whether or not any plated component among Zn, Al and Mg is present at 1% by atm or more in quantitative analysis with EPMA. A region in which 1% by atm or more of any plated component of Zn, Al and Mg can be confirmed to be present in quantitation with EPMA is defined as a region covered with the linear film.

This operation is carried out three times, and the average value is calculated.

Measurement conditions of EPMA are a measurement region that is the width of the cut cross section (namely, steel thickness) × 10 mm, an accelerating voltage of 25 kV, and a diameter of electron beam of 10 µm.

### -Maximum Length of Linear Film-

The maximum length of the linear film is preferably from 70 to 100% with respect to the steel thickness of the cut-and-processed product.

In a case in which the maximum length of the linear film is 70% or more, the cut end surface is covered with the linear film from one end toward other end in the steel thickness direction of the cut end surface without any unevenness at any one end of the cut end surface. Therefore, corrosion resistance is easily enhanced.

Accordingly, the maximum length of the linear film is preferably in the above range. The maximum length of the linear film is more preferably from 90 to 100%.

The maximum length of the linear film is measured as follows.

A repair coat (namely, a binder resin) is completely removed from a cut end surface of a cut-and-processed component as a measuring object, by immersion in a solvent that dissolves the repair coat and washing with an ultrasonic washing machine for 1 minute or more.

Next, gold is vapor-deposited at a thickness of about 10 nm on the cut end surface, whereby a specimen in which the cut end surface serves as an observation surface is produced.

An element distribution of Zn, Al and Mg among components of the plating layer in the observation surface of the specimen is measured with an electron probe micro analyzer (EPMA). The length of the longest linear region, in a linear region in which any of Zn, Al and Mg is detected, is measured. The length of the linear region is here defined as the length along the steel thickness direction of the specimen (see T in Figure 1). The proportion of the length of the longest linear region with respect to the steel thickness of the specimen is then determined.

This operation is carried out three times, and the average value is determined.

The method of measuring the maximum length of the linear film, besides the above, is the same method as the method of measuring the coverage with the linear film.

### -Repair Coat-

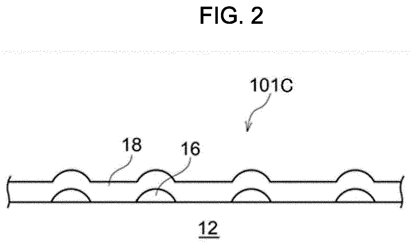

A non-plated surface of the base steel material and the linear film around the non-plated surface, in the cut end surface of the cut-and-processed product according to the disclosure, are covered with a repair coat (see Figure 1 and Figure 2).

Specifically, for example, the repair coat may cover not only the non-plated surface of the base steel material, but also the linear film located within at least 100 µm from an edge (namely, a boundary between the non-plated surface of the base steel material and the linear film) of the linear film. The repair coat is preferably formed so as to cover the entire cut end surface.

Figure 2 is a schematic cross-sectional view of the cut-and-processed product cut along a direction perpendicular to the cut end surface of the cut-and-processed product and perpendicular to the steel thickness direction.

In Figure 2, 101C represents the cut end surface of the cut-and-processed product, 12 represents the base steel material of the plated steel material, 16 represents the linear film, and 18 represents the repair coat.

The formation state of the repair coat is confirmed as follows.

A cut-and-processed component as a measuring object is cut along a direction perpendicular to the cut end surface and perpendicular to the steel thickness direction.

Next, an embedding treatment with an embedding resin in which a steel sheet as a measuring object is mixed at a predetermined proportion with an embedding/curing agent is made, and a sample subjected to the embedding treatment is mechanically polished, thereby exposing a cut surface obtained by cutting the cut-and-processed component, and producing a specimen with the cut surface as an observation surface.

The observation surface of the specimen is observed at a magnification of from 50 to 100x with an EDS (Energy Dispersive X-ray Spectrometer)-attached SEM (Scanning Electron Microscope). An element distribution of Zn, Al and Mg among components of the plating layer is also measured. An edge of the linear film is established by a region in which any of Zn, Al and Mg is detected. The distance between an edge of the linear film and an edge of the repair coat is determined from an observed image with SEM. The distance between an edge of the linear film and an edge of the repair coat is here a distance along a surface of the linear film.

This operation can allow the formation state of the repair coat to be confirmed.

Measurement conditions of EDS are a measurement region that is the width of the cut cross section (namely, steel thickness) × 200 µm in the cutting direction, an accelerating voltage of 15 V, and a diameter of electron beam of 10 µm.

### --Composition of Repair Coat--

The repair coat includes a component having the sacrificial corrosion-proof effect.

Specifically, the repair coat preferably includes a Zn-based metal powder and a binder resin. The repair coat may, if necessary, include any other additive.

The Zn-based metal powder is a metal powder containing Zn.

The Zn-based metal powder may be a metal powder containing Zn singly, or may be a metal powder containing Zn and a metal other than Zn.

The metal powder containing Zn and a metal other than Zn may be a mixed metal powder of a metal powder containing Zn singly and a metal powder containing a metal other than Zn singly, or may be an alloy metal powder containing Zn and a metal other than Zn.

Examples of the metal other than Zn include Al, Si, Mg, Co, Ti, V, Cr, Mn, Fe, Co, Ni, and stainless steel.

Among them, the metal other than Zn is preferably Al. In other words, the Zn-based metal powder preferably includes Zn and Al. In a case in which the metal powder contains Al, Zn₆ Al₂(OH)₁₆CO₃·4H₂O that is considered to have excellent corrosion-proof properties to a steel sheet as a substrate, due to Zn and Al, is easily produced, and therefore corrosion resistance is enhanced.

The content of Al with respect to Zn in the Zn-based metal powder containing Zn and Al is preferably from 20 to 45% by mass, more preferably from 25 to 35% by mass, particularly preferably from 28 to 34% by mass.

In a case in which the content of Al is 20% by mass or more, excess reductions in initial coat resistivity R1 and coat resistivity R2 after immersion in salt water are suppressed and corrosion resistance is enhanced.

In a case in which the content of Al is 45% by mass or less, an excess increase in coat resistivity R2 after immersion in salt water is suppressed and cathode peeling of the repair coat hardly occurs.

The total content of Zn and Al in the Zn-based metal powder containing Zn and Al, with respect to the Zn-based metal powder, is preferably 90% by mass or more, more preferably 95% by mass or more, particularly preferably 100% by mass.

In other words, the total content of any other metal than Zn and Al (in particular, content of V), with respect to the Zn-based metal powder, is preferably 10% by mass or less, more preferably 5% by mass or less, particularly preferably 0% by mass.

The average particle size of the Zn-based metal powder is preferably from 1 to 20 µm, more preferably from 1 to 10 µm. The average particle size of the Zn-based metal powder is in the above range, whereby corrosion resistance is enhanced.

The "average particle size" is a particle size at which the accumulation from the smaller size reaches 50% in a particle size distribution on the number basis, as determined by a dynamic light scattering method.

The particle size of the Zn-based metal powder is determined by dissolving the repair coat (namely, binder resin) in a solvent, recovering the Zn-based metal powder by a centrifugation method, and measuring the particle size.

The content of the Zn-based metal powder, with respect to the entire repair coat, is preferably from 60 to 80% by mass, more preferably from 65 to 75% by mass.

In a case in which the content of the Zn-based metal powder is 60% by mass or more, excess increases in initial coat resistivity and coat resistivity after immersion in salt water are suppressed, and cathode peeling of the repair coat hardly occurs.

In a case in which the content of the Zn-based metal powder is 80% by mass or less, excess reductions in initial coat resistivity and coat resistivity after immersion in salt water are suppressed, and corrosion resistance is enhanced.

Accordingly, the content of the Zn-based metal powder is preferably in the above range.

Examples of the binder resin include well-known resins such as a polystyrene resin, a polyester resin, an epoxy resin, a urethane resin, a polyolefin resin, an acrylic resin, and a phenol resin.

Among them, the binder resin is preferably at least one selected from the group consisting of a polystyrene resin and an epoxy resin. In a case in which such a resin is applied, the coat resistivity after immersion in salt water is easily controlled in a preferred range, and corrosion resistance is easily enhanced.

The binder resin may be a crosslinked resin or may be a non-crosslinked resin, and is preferably a crosslinked resin from the viewpoint of an enhancement in corrosion resistance.

The crosslinking resin to be used for forming a crosslinked resin can be any well-known crosslinking agent such as melamine, isocyanate, a silane compound, a zirconium compound, or a titanium compound depending on the type of a resin to be crosslinked.

The content of the binder resin, with respect to the repair coat, is preferably from 20 to 40% by mass, more preferably from 25 to 35% by mass.

In a case in which the content of the binder resin is 20% by mass or more, excess reductions in initial coat resistivity and coat resistivity after immersion in salt water are suppressed, and corrosion resistance is enhanced.

In a case in which the content of the binder resin is 40% by mass or less, excess increases in initial coat resistivity and coat resistivity after immersion in salt water are suppressed, and cathode peeling of the repair coat hardly occurs.

Accordingly, the content of the binder resin is preferably in the above range.

Examples of any other additive in the repair coat include a pigment (MgO, a pigment (MgO, Al₂O₃, sedimentable barium sulfate, barium carbonate, calcium carbonate, carbon, magnesium carbonate, or the like), a dispersant, a defoamer, a preservative agent, a thickener, or a film formation aid.

### --Thickness of Repair Coat--

A too low thickness of the repair coat leads to a reduction in corrosion resistance. The upper limit value of the thickness of the repair coat is not particularly limited, and a too high thickness leads to not only a higher cost with respect to the cut end surface, but also a longer drying time after repair paint application.

The thickness of the repair coat is 10 µm or more. The thickness of the repair coat is preferably from 10 to 100 µm, more preferably from 20 to 30 µm.

The thickness of the repair coat is measured as follows.

A cut-and-processed component as a measuring object is cut along a direction perpendicular to the cut end surface and perpendicular to the steel thickness direction.

Next, the cut-and-processed component as a measuring object is subjected to an embedding treatment with an embedding resin mixed at a predetermined proportion with an embedding/curing agent, and the sample subjected to the embedding treatment is mechanically polished, thereby exposing a cut surface obtained by cutting the cut-and-processed component, and producing a specimen in which a surface perpendicular to the cut end surface serves as an observation surface.

The observation surface of the specimen is observed at a magnification of from 50 to 100x with SEM (Scanning Electron Microscope), and the thickness of the repair coat at any point, formed on the non-plated surface of the base steel material, is measured.

This thickness measurement is carried out with three embedded samples, and the average value of three measurement values is calculated.

### --Coat Resistivity of Repair Coat--

In a case in which the initial coat resistivity R1 in the repair coat is less than 10 Ω/cm², the metal powder in the repair coat is gradually oxidized, and the sacrificial corrosion-proof performance of the repair coat is early deactivated, whereby corrosion resistance is reduced.

In a case in which the initial coat resistivity R1 in the repair coat is more than 1000 Ω/cm², the sacrificial corrosion-proof performance of the repair coat does not act at all, red rust or the like may occur on the steel basis material under the repair coat due to the influence of water or the like in the air, and corrosion resistance is reduced.

Accordingly, the initial coat resistivity R1 in the repair coat is from 10 to 1000 Ω/cm².

The initial coat resistivity R1 in the repair coat indicates a coat resistivity in a state in which the proportion of no corrosion in the total amount of the metal powder in the repair coat is 80% or more. In the case of a state in which the proportion of no corrosion in the total amount of the metal powder in the repair coat is 80% or more, the coat resistivity R1 in this state is from 10 to 1000 Ω/cm². The initial coat resistivity R1 is preferably from 300 to 500 Ω/cm² from the above viewpoint.

The initial coat resistivity R1 indicates the coat resistivity in any state of a state in which the cut-and-processed product is stored under the environment of no corrosion or a state in which the cut-and-processed product is stored under the environment of corrosion, as long as the proportion of no corrosion in the total amount of the metal powder in the coat is 80% or more.

Specifically, the coat resistivity in the repair coat of the cut-and-processed product during a period until the cut-and-processed product is subjected to any application (for example, until the cut-and-processed product is placed as a beam of a guardrail) after production of the cut-and-processed product, and under the environment of no corrosion corresponds to the "initial coat resistivity R1".

As long as the proportion of no corrosion in the total amount of the metal powder in the repair coat is 80% or more, the coat resistivity in the repair coat of the cut-and-processed product used as a beam of a guardrail under the environment of corrosion also corresponds to the "initial coat resistivity R1".

The proportion of corrosion in the total amount of the metal powder is defined to be the total ratio of the ratio of oxidization and the ratio of hydroxidization in the metal powder. The method of measuring the proportion of corrosion of the metal powder is performed by analysis of a cross section image of the repair coat. Specifically, the method is as follows.

The central area excluding a range of 10 mm from the end of the repair coat, in the cut end surface of the cut-and-processed component as a measuring object, is cut along a direction perpendicular to the cut end surface and in parallel with the steel thickness direction.

Next, the cut-and-processed component as a measuring object is subjected to an embedding treatment with an embedding resin mixed at a predetermined proportion with an embedding/curing agent and the sample subjected to the embedding treatment is mechanically polished, thereby exposing the cut surface cutting the cut-and-processed component and the repair coat, and producing a specimen with a surface perpendicular to the cut end surface as an observation surface.

The observation surface of the specimen is subjected to mapping analysis by SEM (Scanning Electron Microscope) loaded with EDS (Energy Dispersive x-ray Spectroscopy). The observation magnification is here a magnification providing a field of view in which the entire repair coat can be observed from the interface between the repair coat and the base steel material, to the coat surface, in the thickness direction and 100 µm or more of the interface between the repair coat and the base steel material can be observed.

This observation of the field of view is carried out at three positions with respect to one embedded sample, namely, at nine positions in a total of three embedded samples, and the proportion of corrosion of the metal powder, with respect to each of such fields of view, is calculated.

The proportion (%) of corrosion in the metal powder is calculated by "(Number of corroded metal powders/Number of all metal powders) × 100" in each field of view.

A corroded metal powder can be distinguished through the matching between detection positions of a metal element such as Zn and oxygen, by mapping analysis with SEM loaded with EDS.

This corroded metal powder here does not include any additive substance originally added in an oxidized state in paint, such as MgO or Al₂O₃. The proportion determined by excluding such an additive substance from the entire corroded metal powder is calculated as follows.

First, the proportion of corrosion of the metal powder is calculated by observation of the field of view, and then the proportion of an additive substance (MgO, Al₂O₃, or the like) added in paint serving as a raw material is subtracted. Specifically, the proportion (%) of an additive substance originally added, such as MgO or Al₂O₃, among all metal particles included in a paint material, is subtracted from the proportion (%) of corrosion of the metal powder, obtained by observation of the field of view.

In other words, the proportion (%) of corrosion of the metal powder is calculated by "(Number of corroded metal powders - Number of additive substances)/Number of all metal powders ×100" in the field of view.

Thus, the average value is calculated from the proportions each obtained by subtracting the measurement value of the proportion of the additive substance from the measurement value of the proportion of corrosion in each of the above nine fields of view.

The value obtained by subtracting the resulting average value (%) of the proportions from 100% (= 100 - Resulting average value of proportions) is defined as "Proportion of no corrosion in total amount of metal powder in repair coat".

The additive substance included in an oxidized state in paint, such as MgO or Al₂O₃, can be distinguished as a corroded metal powder by calculating the increase of an oxide in the repair coat from an additive substance-derived oxide in paint.

In this regard, in a case in which the coat resistivity R2 after immersion in salt water, in the repair coat, is less than 5 Ω/cm², the metal powder in the repair coat is rapidly consumed under the environment of corrosion, and the sacrificial corrosion-proof performance of the repair coat is early deactivated, whereby corrosion resistance is reduced.

In a case in which the coat resistivity R2 after immersion in salt water, in the repair coat, is more than 50 Ω/cm², reduction reaction of oxygen collectively occurs in an exposed portion of the steel basis material immediately below the repair coat under the environment of corrosion and the change to an basic environment is caused to hardly allow intermolecular force of a hydrogen bond or the like to act, whereby cathode peeling of the repair coat occurs to result in a reduction in corrosion resistance.

The coat resistivity R2 after immersion in salt water is preferably from 10 to 45 Ω/cm², still more preferably from 25 to 40 Ω/cm².

The coat resistivity after immersion in salt water, in the repair coat, is a coat resistivity after immersion of the cut-and-processed product in 5% by mass of salt water for 3 hours. More specifically, the coat resistivity is a coat resistivity after immersion of at least the cut end surface of the cut-and-processed product in 5% by mass of salt water at a liquid temperature of 25°C for 3 hours.

The initial coat resistivity and the coat resistivity after immersion in salt water, in the repair coat, are adjusted by, for example, the thickness of the repair coat, and the type and the amount of the metal powder.

The coat resistivity is measured as follows.

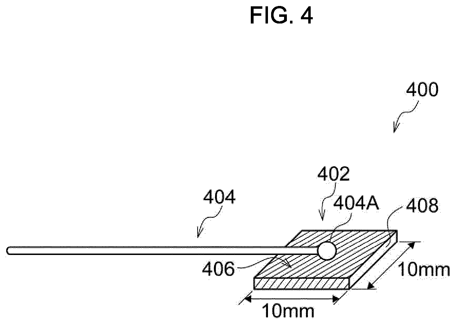

A cut-and-processed product as a measuring object is cut out to a 10-mm square, and a cut piece having a cut end surface on which the repair coat is formed is obtained. The cut end surface of the cut piece obtained is set as a measurement surface, and a conductor is bound to a moiety other than the measurement surface by a method that does not prevent conduction, such as spot welding or a soldering treatment conductor. A cut end surface as a measuring object is exposed only at a certain area, other moiety is insulated and sealed, and thus a specimen of the repair coat is obtained (see Figure 4).

The specimen obtained is subjected to alternating-current impedance measurement of the repair coat on the cut end surface exposed, and thus the coat resistivity is measured.

This operation is carried out twice, and the average value of the coat resistivity is calculated.

In Figure 4, 400 represents the specimen, 402 represents the cut piece of the cut-and-processed product, 404 represents the conductor, 404A represents a binding portion of the conductor, 406 represents an insulation seal, and 408 represents the repair coat on the cut end surface exposed.

### (Application of Cut-and-Processed Product)

The cut-and-processed product of the disclosure is applied to an application such as a steel sheet to be used for a guardrail (specifically, a guardrail component, in particular, a beam of a guardrail), or shaped steel, a supporting column, a joint, a sound-insulating wall, a sound-shielding wall, a member for electrical equipment, a member for safe environment, a structural member, a solar mount, or the like for a plastic greenhouse or an agricultural greenhouse.

The cut-and-processed product of the disclosure is utilized in which the plated steel material is cut and processed and then subjected to, for example, processing such as press molding depending on the above application.

### Examples

Hereinafter, the disclosure is further specifically described with reference to Examples. However, these Examples do not limit the disclosure.

### (Preparation of Plated Steel Plate)

The following steel types of plated steel material were prepared.
Zn-6%Al-3%Mg: Zn-Al-Mg-based-plated steel sheet (steel thickness = 4.5 mm, plating composition = Al: 6% by mass, Mg: 3% by mass, balance: Zn, amount of attachment of plate on one surface = 120 g/m²)
Zn-11%Al-3%Mg: Zn-Al-Mg-based-plated steel sheet (steel thickness = 4.5 mm, plating composition = Al: 11% by mass, Mg: 3% by mass, balance: Zn, amount of attachment of plate on one surface = 120 g/m²)
Zn-19%Al-6%Mg: Zn-Al-Mg-based-plated steel sheet (steel thickness = 4.5 mm, plating composition = Al: 19% by mass, Mg: 6% by mass, balance: Zn, amount of attachment of plate on one surface = 120 g/m²)
Zn: melt zinc-plated steel sheet (steel thickness = 4.5 mm, amount of attachment of plate on one surface = 120 g/m²)

### (Paint for Repair)

Each paint for repair, having a composition shown in Table 1, was prepared.

### (Examples)

The plated steel sheet was cut and processed by a laser cutting method or a conventional shirring processing method, according to conditions in Table 2, and a specimen having a cut end surface illustrated in Figure 1 or Figure 3 was obtained. In the laser cutting method, the flow rate and the pressure of a gas ejected from a laser nozzle were adjusted, and the coverage of the cut end surface with a linear film and the maximum length of the linear film were as shown in Table 2. In the shirring processing method, the clearance between a shearing blade and a die was adjusted and the coverage of the cut end surface with a plating layer was as shown in Table 2.

Next, the paint for repair was applied to a non- plated surface of the base steel material of the plated steel sheet and a linear film or a plating layer around the non- plated surface, in the cut end surface of the specimen, according to conditions shown in Table 2, and thus a repair coat was formed.

The thickness of the repair coat was as shown in Table 2. The initial coat resistivity, and the coat resistivity after immersion in salt water (namely, the coat resistivity after immersion of a cut-and-processed product in % by mass of salt water for 3 hours) were as shown in Table 2.

These operations provided a specimen of a cut-and-processed product.

### (Evaluations)

The following evaluations were carried out with respect to the cut end surface of the resulting specimen of the cut-and-processed product.

### -Cathode Peeling Resistance-

A composite cycle corrosion test according to CCT-JASO M609 was carried out for 30 cycles.

Thereafter, a tape ("trade name CELLULOSE TAPE (registered trademark)" manufactured by NICHIBAN CO., LTD.) was applied to a surface with the repair coat formed thereon, on the cut end surface of the specimen of the cut-and-processed product, and then peeled.

The tape peeled was observed, and the proportion (hereinafter, "peeling area ratio") of the area of the repair coat from which the tape was peeled, with respect to the area of the repair coat to which the tape was applied, was determined, and evaluated according to the following criteria. "A" and "B" were regarded as pass.
A: a peeling area ratio of 0%
B: a peeling area ratio of from more than 0% to 5%
D: a peeling area ratio of more than 5%

### -Long-Term Corrosion Resistance 1-

A composite cycle corrosion test according to CCT-JASO M609 was carried out for 120 cycles.

The area of red rust occurrence on the cut end surface of the specimen of the cut-and-processed product was measured, and evaluated according to the following criteria. "A" and "B" were regarded as pass.
A: a red rust area ratio of 0%
B: a red rust area ratio of from more than 0% to 5%
C: a red rust area ratio of from more than 5% to 20%
D: a red rust area ratio of more than 20%
B or higher rating: pass

### -Long-Term Corrosion Resistance 2-

A composite cycle corrosion test according to CCT-JASO M609 was carried out for 180 cycles.

The area of red rust occurrence on the cut end surface of the specimen of the cut-and-processed product was measured, and evaluated according to the following criteria. "A" and "B" were regarded as pass.
A: a red rust area ratio of 0%
B: a red rust area ratio of from more than 0% to 20%
D: a red rust area ratio of more than 20%
B or higher rating: pass

**[Table 1]**

| Type of paint No. | Metal powder | | | | Other pigment | | Al powder/Zn powder Mass ratio | Binder resin | | Metal powder/coat Mass ratio |
|---|---|---|---|---|---|---|---|---|---|---|
| | Zn powder | | Al powder | | | | | Type | Blending ratio [% by mass] | |
| | Blending ratio [% by mass] | Particle size [µm] | Blending ratio [% by mass] | Particle size [µm] | Blending ratio [% by mass] | Particle size [µm] | | | | |
| 1 | 60 | from 1 to 10 | 12 | from 1 to 10 | 0 | | 20.0% | Polystyrene | 28 | 72.0% |
| 2 | 55 | from 1 to 10 | 17 | from 1 to 10 | 0 | | 30.9% | Polystyrene | 28 | 72.0% |
| 3 | 50 | from 1 to 10 | 22 | from 1 to 10 | 0 | | 44.0% | Polystyrene | 28 | 72.0% |
| 4 | 61 | from 1 to 10 | 19 | from 1 to 10 | 0 | | 31.1% | Polystyrene | 20 | 80.0% |
| 5 | 46 | from 1 to 10 | 14 | from 1 to 10 | 0 | | 30.4% | Polystyrene | 40 | 60.0% |
| 6 | 54.9 | from 1 to 10 | 16.9 | from 1 to 10 | (Si)0.2 | from 0.1 to 0.5 | 30.8% | Polystyrene | 28 | 71.9% |
| 7 | 54.9 | from 1 to 10 | 16.9 | from 1 to 10 | (MgO)0.2 | from 1 to 5 | 30.8% | Polystyrene | 28 | 71.9% |
| 8 | 72 | from 1 to 10 | 0 | from 1 to 10 | 0 | | - | Polystyrene | 28 | 72.0% |
| 9 | 62 | from 1 to 10 | 10 | from 1 to 10 | 0 | | 16.1% | Polystyrene | 28 | 72.0% |
| 10 | 55 | from 1 to 10 | 17 | from 1 to 10 | 0 | | 30.9% | Polyester | 28 | 72.0% |
| 11 | 55 | from 1 to 10 | 17 | from 1 to 10 | 0 | | 30.9% | Epoxy | 28 | 72.0% |
| 12 | 0 | from 1 to 10 | 72 | from 1 to 10 | 0 | | - | Polystyrene | 28 | 72.0% |
| 13 | 65 | from 1 to 10 | 20 | from 1 to 10 | 0 | | 30.8% | Polystyrene | 15 | 85.0% |
| 14 | 42 | from 1 to 10 | 13 | from 1 to 10 | 0 | | 31.0% | Polystyrene | 45 | 55.0% |
| 15 | 48 | from 1 to 10 | 24 | from 1 to 10 | 0 | | 50.0% | Polystyrene | 28 | 72.0% |
| 16 | 55 | from 1 to 10 | 17 | from 1 to 10 | 0 | | 30.9% | Urethane | 28 | 72.0% |
| 17 | 55 | from 1 to 10 | 17 | from 1 to 10 | 0 | | 30.9% | Acrylic | 28 | 72.0% |

**[Table 2]**

| | | | | | Repair coat | | | | | | | |
|---|---|---|---|---|---|---|---|---|---|---|---|---|
| No. | Plating composition | State of cut end surface | Coverage of cut end surface with linear film or plating layer [%] | Maximu m length of cut end surface-linear film [%] | Type of paint | Thickn ess {µm} | Initial coat resistivity [Ω/cm²] | Coat resistivity after immersio n in salt water [Ω/cm²] | Cathode peeling resistan ce | Long-term corrosi on resistan ce 1 | Long-term corrosi on resistan ce 2 | Note |
| 1 | Zn-19%Al-6%Mg | Figure 1 | 70 | 95 | 1 | 30 | 330 | 30 | A | A | B | Disclosur e Example |
| 2 | Zn-19%Al-6%Mg | Figure 1 | 70 | 95 | 2 | 30 | 330 | 35 | A | A | A | Disclosur e Example |
| 3 | Zn-19%Al-6%Mg | Figure 1 | 70 | 95 | 3 | 30 | 330 | 40 | A | A | B | Disclosur e Example |
| 4 | Zn-19%Al-6%Mg | Figure 1 | 70 | 95 | 4 | 30 | 300 | 30 | A | A | B | Disclosure Example |
| 5 | Zn-19%Al-6%Mg | Figure 1 | 70 | 95 | 5 | 30 | 500 | 50 | B | B | B | Disclosur e Example |
| 6 | Zn-19%Al-6%Mg | Figure 1 | 70 | 95 | 6 | 30 | 330 | 35 | A | A | B | Disclosur e Example |
| 7 | Zn-19%Al-6%Mg | Figure 1 | 70 | 95 | 7 | 30 | 330 | 35 | A | A | B | Disclosur e Example |
| 8 | Zn-19%Al-6%Mg | Figure 1 | 70 | 95 | 8 | 30 | 300 | 20 | A | B | B | Disclosur e Example |
| 9 | Zn-19%Al-6%Mg | Figure 1 | 70 | 95 | 9 | 30 | 300 | 25 | A | B | B | Disclosur e Example |
| 10 | Zn-19%Al-6%Mg | Figure 1 | 70 | 95 | 10 | 30 | 330 | 45 | B | A | B | Disclosur e Example |
| 11 | Zn-19%Al-6%Mg | Figure 1 | 70 | 95 | 11 | 30 | 330 | 35 | A | A | B | Disclosure Example |
| 12 | Zn-19%Al-6%Mg | Figure 1 | 70 | 95 | 2 | 10 | 300 | 30 | A | B | B | Disclosur e Example |
| 13 | Zn-19%Al-6%Mg | Figure 1 | 70 | 95 | 2 | 100 | 500 | 50 | A | A | A | Disclosur e Example |
| 14 | Zn-19%Al-6%Mg | Figure 1 | 60 | 70 | 2 | 30 | 330 | 35 | A | A | B | Disclosur e Example |
| 15 | Zn-19%Al-6%Mg | Figure 1 | 90 | 100 | 2 | 30 | 330 | 35 | A | A | A | Disclosur e Example |
| 16 | Zn-19%Al-6%Mg | Figure 1 | 70 | 95 | 4 | 10 | 10 | 5 | A | B | B | Disclosur e Example |
| 17 | Zn-19%Al-6%Mg | Figure 1 | 70 | 95 | 5 | 100 | 1000 | 50 | B | B | B | Disclosur e Example |
| 18 | Zn-19%Al-6%Mg | Figure 1 | 70 | 70 | 2 | 30 | 330 | 35 | A | A | B | Disclosure Example |
| 19 | Zn-19%Al-6%Mg | Figure 1 | 70 | 100 | 2 | 30 | 330 | 35 | A | A | A | Disclosur e Example |
| 20 | Zn-11%Al-3%Mg | Figure 1 | 70 | 95 | 1 | 30 | 330 | 30 | A | A | B | Disclosur e Example |
| 21 | Zn-11%Al-3%Mg | Figure 1 | 70 | 95 | 2 | 30 | 330 | 35 | A | A | A | Disclosur e Example |
| 22 | Zn-11%Al-3%Mg | Figure 1 | 70 | 95 | 3 | 30 | 330 | 40 | A | A | B | Disclosur e Example |
| 23 | Zn-6%Al-3%Mg | Figure 1 | 70 | 95 | 1 | 30 | 330 | 30 | A | A | B | Disclosur e Example |
| 24 | Zn-6%Al-3%Mg | Figure 1 | 70 | 95 | 2 | 30 | 330 | 35 | A | A | A | Disclosur e Example |
| 25 | Zn-6%Al-3%Mg | Figure 1 | 70 | 95 | 3 | 30 | 330 | 40 | A | A | B | Disclosure Example |
| 26 | Zn-19%Al-6%Mg | Figure 1 | 70 | 95 | 2 | 8 | 250 | 20 | A | C | D | Comparat ive Example |
| 27 | Zn-19%Al-6%Mg | Figure 1 | 70 | 95 | 12 | 30 | 5000 | 3000 | D | D | D | Comparat ive Example |
| 28 | Zn-19%Al-6%Mg | Figure 1 | 70 | 95 | 13 | 30 | 5 | 5 | A | C | D | Comparat ive Example |
| 29 | Zn-19%Al-6%Mg | Figure 1 | 70 | 95 | 14 | 30 | 1500 | 80 | D | C | D | Comparat ive Example |
| 30 | Zn-19%Al-6%Mg | Figure 1 | 70 | 95 | 15 | 30 | 500 | 60 | B | C | D | Comparat ive Example |
| 31 | Zn-19%Al-6%Mg | Figure 1 | 55 | 100 | 2 | 30 | 330 | 35 | A | C | D | Comparat ive Example |
| 32 | Zn-19%Al-6%Mg | Figure 1 | 55 | 60 | 2 | 30 | 330 | 35 | A | D | D | Comparative Example |
| 33 | Zn-19%Al-6%Mg | Figure 3 | 45 | - | 1 | 30 | 330 | 30 | A | C | D | Comparat ive Example |
| 34 | Zn-19%Al-6%Mg | Figure 3 | 45 | - | 2 | 30 | 330 | 35 | A | C | D | Comparat ive Example |
| 35 | Zn-19%Al-6%Mg | Figure 3 | 45 | - | 3 | 30 | 330 | 40 | A | C | D | Comparat ive Example |
| 36 | Zn | Figure 1 | 70 | 80 | 1 | 30 | 330 | 30 | A | D | D | Comparat ive Example |
| 37 | Zn | Figure 1 | 70 | 80 | 2 | 30 | 330 | 35 | A | D | D | Comparat ive Example |
| 38 | Zn | Figure 1 | 70 | 80 | 3 | 30 | 330 | 40 | A | D | D | Comparat ive Example |
| 39 | Zn-19%Al-6%Mg | Figure 1 | 70 | 95 | 16 | 30 | 420 | 47 | B | A | B | Disclosure Example |
| 40 | Zn-19%Al-6%Mg | Figure 1 | 70 | 95 | 17 | 30 | 560 | 50 | B | B | B | Disclosur e Example |
| 42 | Zn-12% Al-5% Mg | Figure 1 | 70 | 95 | 1 | 30 | 330 | 30 | A | A | B | Disclosur e Example |
| 43 | Zn-12% Al-5% Mg | Figure 1 | 70 | 95 | 2 | 30 | 330 | 35 | A | A | A | Disclosur e Example |
| 44 | Zn-12% Al-5% Mg | Figure 1 | 70 | 95 | 3 | 30 | 330 | 40 | A | A | B | Disclosur e Example |
| 45 | Zn-3.5%Al-3%Mg | Figure 1 | 70 | 95 | 1 | 30 | 330 | 30 | A | A | B | Disclosur e Example |
| 46 | Zn-3.5%Al-3%Mg | Figure 1 | 70 | 95 | 2 | 30 | 330 | 35 | A | A | A | Disclosur e Example |
| 47 | Zn-3.5%Al-3%Mg | Figure 1 | 70 | 95 | 3 | 30 | 330 | 40 | A | A | B | Disclosure Example |

As clear from the above results, Disclosure Examples each exhibited suppressed cathode peeling of a repair coat and had excellent corrosion resistance of a cut end surface from the early stage to the long term, as compared with Comparative Examples.

The descriptions of symbols are as follows.
10 Plate steel material
12 Base steel material
14 Plate layer
16 Linear film
18 Repair coat
101 Cut-and-processed product
101C cut end surface

The disclosure of Japanese Patent Application No. 2022-157063 is herein incorporated by reference in its entirety.

All literature, patent applications, and technical standards described herein are herein incorporated by reference, as if each individual literature, patent application, and technical standard were specifically and individually indicated to be incorporated by reference.

## Claims

1. A cut-and-processed product of a Zn-Al-Mg-based plated steel material comprising a base steel material and a Zn-Al-Mg-based plating layer covering a surface of the base steel material, wherein:
a cut end surface of the cut-and-processed product is covered with a linear film in which a component of the Zn-Al-Mg-based plating layer linearly flows, and a coverage of the cut end surface with the linear film is from 60 to 90%,
a non-plated surface of the base steel material and the linear film around the non-plated surface, in the cut end surface of the cut-and-processed product, are covered with a repair coat,
an initial coat resistivity R1 is from 10 to 1000 Ω/cm², and a coat resistivity R2 after immersion of the cut-and-processed product in 5% by mass salt water for 3 hours is from 5 to 50 Ω/cm², in the repair coat, and
a thickness of the repair coat is 10 µm or more.

2. The cut-and-processed product according to claim 1, wherein the repair coat comprises a Zn-based metal powder and a binder resin.

3. The cut-and-processed product according to claim 1, wherein a maximum length of the linear film on the cut end surface of the cut-and-processed product is from 70 to 100% with respect to a steel thickness of the cut-and-processed product.

4. The cut-and-processed product according to claim 1, wherein the initial coat resistivity R1 in the repair coat is from 300 to 500 Ω/cm².

5. The cut-and-processed product according to claim 1, wherein the coat resistivity R2 after immersion in the repair coat is from 25 to 40 Ω/cm².

6. The cut-and-processed product according to claim 2, wherein the Zn-based metal powder comprises Zn and Al.

7. The cut-and-processed product according to claim 6, wherein a content of Al with respect to Zn in the Zn-based metal powder comprising Zn and Al is from 20 to 45% by mass.

8. The cut-and-processed product according to claim 6, wherein a content of Al with respect to Zn in the Zn-based metal powder comprising Zn and Al is from 28 to 34% by mass.

9. The cut-and-processed product according to claim 2, wherein a content of the Zn-based metal powder with respect to the entire repair coat is from 60 to 80% by mass of the metal powder.

10. The cut-and-processed product according to claim 2, wherein the binder resin is at least one selected from the group consisting of a polystyrene resin and an epoxy resin.

11. A guardrail comprising the cut-and-processed product according to any one of claim 1 to claim 10.
